Europäisches Patentamt

European Patent Office

Office européen des brevets

(19)

(11) Numéro de publication: **0 041 013**
**B1**

(12) **FASCICULE DE BREVET EUROPEEN**

(45) Date de publication du fascicule du brevet:
21.08.85

(51) Int. Cl.⁴: **C 10 M 175/06,** C 10 G 31/11,
B 01 D 13/00, B 01 D 13/04

(21) Numéro de dépôt: 81400793.6

(22) Date de dépôt: **20.05.81**

(54) **Procédé de traitement par ultrafiltration à température élevée d'une charge hydrocarbonée.**

(30) Priorité: 22.05.80  FR 8011442

(43) Date de publication de la demande:
02.12.81 Bulletin 81/48

(45) Mention de la délivrance du brevet:
21.08.85 Bulletin 85/34

(84) Etats contractants désignés:
AT BE CH DE GB IT LI NL SE

(56) Documents cités:
FR - A - 886 208
FR - A - 924 253
FR - A - 932 922
FR - A - 1 197 982
FR - A - 2 251 351
FR - A - 2 263 296
FR - A - 2 308 681
FR - A - 2 353 631
FR - A - 2 391 271
US - A - 4 060 488

(73) Titulaire: **COMMISSARIAT A L'ENERGIE ATOMIQUE
Etablissement de Caractère Scientifique Technique et
Industriel, B.P. 510, F-75752 Paris Cedex 15 (FR)**
Titulaire: **COMPAGNIE FRANCAISE DE RAFFINAGE
Société anonyme dite:, 5, rue Michel-Ange,
F-75781 Paris Cedex 16 (FR)**

(72) Inventeur: **Arod, Jean, Montée Saint-Michel,
F-04100 Pierrevert (FR)**
Inventeur: **Bartoli, Bernard, Les Estrets,
F-13490 Jouques (FR)**
Inventeur: **Bergez, Pierre, 32, rue Dareau, F-75014 Paris
(FR)**
Inventeur: **Biedermann, Jean-Michel, 10, rue du
Languedoc, F-76290 Montivilliers (FR)**
Inventeur: **Caminade, Philippe, rue Notre-Dame,
F-26700 Pierrelatte (FR)**
Inventeur: **Martinet, Jean-Marie, "Le Jabron 2" rue du
Général Pau, F-26200 Montélimar (FR)**
Inventeur: **Maurin, Jean, Rue du Temple,
F-76290 Montivilliers (FR)**
Inventeur: **Rossarie, Jean, 3, rue Marceau Flandre,
F-76000 Le Havre (FR)**

(74) Mandataire: **Mongrédien, André et al, c/o
BREVATOME 25, rue de Ponthieu, F-75008 Paris (FR)**

## Description

La présente invention a pour objet un procédé de traitement par ultrafiltration à température élevée, d'une charge hydrocarbonée.

Par »charge hydrocarbonée«, on entend une charge composée principalement d'hydrocarbures, mais pouvant contenir également d'autres composés, qui outre des atomes de carbone et d'hydrogène, peuvent contenir des hétéroatomes comme l'oxygène, l'azote, le soufre ou le vanadium.

De telles charges peuvent être constituées notamment par des produits obtenus lors du raffinage du pétrole brut.

L'ultrafiltration est une technique de séparation par transfert de masse au travers d'une membrane semi-perméable sous l'effet d'un gradient de pression, le produit recueilli traversant la membrane constituant l'ultrafiltrat.

La consommation d'huile moteur en France s'élève approximativement à 550 000 tonnes par an sur lesquelles 250 000 tonnes par an d'huiles usées sont récupérées. Une faible partie seulement de ces 250 000 tonnes d'huiles usées est régénérée par un procédé comprenant un traitement à l'acide pour floculer les particules de carbone qu'elles contiennent. Ce procédé a l'inconvénient de produire des boues acides qu'il est nécessaire d'éliminer.

Il faut savoir d'autre part que la plupart des pétroles bruts alimentant les raffineries françaises sont asphaltiques, et donnent après distillation sous pression réduite un résidu formé de maltènes, de résines et d'asphaltènes. Ce résidu peut atteindre jusqu'à 20% de certains pétroles bruts. Le désasphaltage, qui consiste à diminuer le taux d'asphaltènes de ce résidu est habituellement effectué à l'aide d'un solvant paraffinique qui flocule les asphaltènes ainsi qu'une proportion variable de résines. Les asphaltènes constituent le brai tandis que les maltènes constituent une huile. Ce procédé nécessite une dépense importante en énergie pour récupérer le solvant. On peut estimer que les résidus de distillation à désasphalter seraient de l'ordre de dix millions à quinze millions de tonnes par an si l'on disposait d'un procédé très économique à cet effet.

Cependant, la valorisation ou la régénération par ultrafiltration des produits ou des résidus pétroliers n'a encore trouvé que peu d'applications concrètes car ces produits sont très visqueux et difficiles à manutentionner à la température ambiante.

On connaît des procédés de traitement par ultrafiltration de produits pétroliers utilisant des membranes organiques. Selon un exemple d'un tel procédé décrit dans le document FR-A-2 262 296 pour »Procédé de régénération d'huile lubrifiante usagée«, l'huile après élimination de divers composants par distillation est mélangée à un solvant tel que le n-hexane. Le mélange obtenu est ensuite soumis à une ultrafiltration au travers d'une barrière organique.

Comme on le constate d'après ce brevet, les procédés de traitement par ultrafiltration à l'aide de membranes organiques imposent pour avoir une faible viscosité, une dilution à l'aide d'un solvant, car les membranes organiques ne peuvent être utilisées à haute température. Ainsi, dans l'exemple cité, la température d'ultrafiltration n'est que de 23°C. Il est nécessaire de distiller ensuite l'ultrafiltrat pour séparer le solvant et le composé valorisable, ce qui est un inconvénient.

On connaît également (document US-A-4 060 488) un procédé de traitement par ultrafiltration de liquides pour les purifier à l'aide d'une barrière d'ultrafiltration minérale revêtue d'une couche d'oxyde de titane, d'aluminium ou de silice. La température de fonctionnement peut être comprise entre 100 et 300°C.

Cependant, dans ce procédé, le diamètre des pores est compris entre 20 et 80 · $10^{-10}$ m (20 à 80 Å). Les barrières se présentent comme un bloc dans lequel sont creusés un grand nombre de canaux. Il n'est pas possible d'appliquer une contre-pression à cette barrière, car une circulation inverse du liquide à filtrer fait sortir les particules des orifices dans lesquels elles sont logées.

Le but de la présente invention est de proposer un procédé économique de traitement de charges hydrocarbonées.

L'invention a pour objet un tel procédé de traitement par ultrafiltration à température élevée d'une charge hydrocarbonée au moyen d'une barrière minérale. Ce procédé s'applique à la régénération d'une huile moteur usée. Il s'applique également à la diminution du taux d'asphaltènes dans une charge hydrocarbonée constituée par exemple par un résidu de distillation sous pression réduite du pétrole.

Plus précisément, ce procédé se caractérise en ce que la charge est filtrée au moyen d'au moins une barrière minérale formée d'un support revêtu d'une couche minérale sensible d'au moins un oxyde métallique et en ce que l'on opère à une température élevée supérieure à 100°C et de préférence comprise entre 100 et 350°C.

La pression d'ultrafiltration peut être notamment comprise entre 1 et 20 bars relatifs.

La vitesse de circulation de la charge peut être notamment comprise entre 1 et 10 m/s.

La barrière minérale est une barrière à support métallique ou à support céramique, ce support étant revêtu d'une couche sensible d'au moins un oxyde métallique choisi dans le groupe comprenant le bioxyde de titane, l'oxyde de magnesium, l'oxyde d'aluminium, les oxydes mixtes à base d'alumine, la silice. De telles barrières sont commercialisées par la société SFEC (Société Française de Fabrications Catalytiques) sous les références UFS 100 Å, UFS 150 Å, UFS 200 Å, selon leur rayon de perméamétrie.

Bien entendu, des barrières d'un rayon de perméamétrie différent peuvent être utilisées dans le procédé de l'invention. Le rayon peut être par exemple compris entre $50 \cdot 10^{-10}$ m et $250 \cdot 10^{-10}$ m (50 Å et 250 Å).

Selon les applications envisagées du procédé selon l'invention, les barrières peuvent être regroupées en nombre variable dans des modules d'ultrafiltration. Ces modules peuvent être disposés en série, en parallèle ou en série-parallèle. Les différents modules peuvent contenir des barrières ayant des rayons de perméamétrie différents, par exemple les premiers des barrières de rayons de $200 \cdot 10^{-10}$ m, les suivants de $150 \cdot 10^{-10}$ m et ainsi de suite.

Selon une première application, le procédé selon l'invention est utilisé pour la régénération de huiles moteur usées. De telles huiles, provenant par exemple de la vidange moteur-boîte-pont d'un véhicule, renferment de 15 à 20% d'impuretés. Ces impuretés sont par exemple de l'eau, des boues, des particules charbonneuses sur lesquelles sont adsorbés les agents dispersifs, des produits d'oxydation de l'huile ou de l'essence, des résines et des laques en solution dans l'huile chaude, en suspension dans l'huile froide, des particules métalliques et enfin des liquides d'usinage.

L'ultrafiltrat produit par le procédé de l'invention est de bonne qualité. Il ne contient pratiquement plus de métaux ni d'additifs. A titre d'exemple, les débits d'ultrafiltration atteignent 500 l/jour $\cdot$ m$^2$ avec des barrières à $200 \cdot 10^{-10}$ m pour une température de fonctionnement de 200°C, une pression de 5 bars et un facteur de concentration de 3.

Le procédé d'ultrafiltration selon l'invention trouve également une application à la diminution du taux d'asphaltènes contenus dans une charge hydrocarbonée.

On sait que les résidus de distillation sous pression réduite des pétroles bruts, c'est-à-dire la partie la plus lourde est justement celle qui contient les fractions lubrifiantes les plus visqueuses et par conséquent de la plus grande valeur. Or, la plupart des pétroles bruts alimentant les raffineries françaises sont asphaltiques et donnent après distillation sous pression réduite un résidu formé de maltènes, de résines et d'asphaltènes représentant jusqu'à 20% de certains pétroles bruts. Les huiles lubrifiantes ne devant pas contenir d'asphaltènes, même à l'état de traces, il est nécessaire de les désasphalter. Le procédé d'ultrafiltration selon l'invention trouve une application à la diminution du taux d'asphaltènes contenus dans une charge hydrocarbonée. La charge hydrocarbonée contenant des asphaltènes est traitée par ultrafiltration selon le procédé de l'invention. Les asphaltènes sont retenus par les barrières, et dans l'ultrafiltrat leur taux est réduit.

De toute façon, les caractéristiques et evantages de la présente invention apparaîtront mieux après la description qui suit d'exemple de réalisation donnés à titre explicatif et nullement limitatif, en référence aux dessins annexés sur lesquels:

— la figure 1 représente schématiquement une forme de mise en oeuvre du procédé d'ultrafiltration de l'invention,
— la figure 2 représente schématiquement les barrières de filtration utilisées dans le procédé de l'invention,
— les figures 3 et 4 représentent des exemples de réalisation du procédé selon l'invention appliqué à la régénération d'une huile usée.

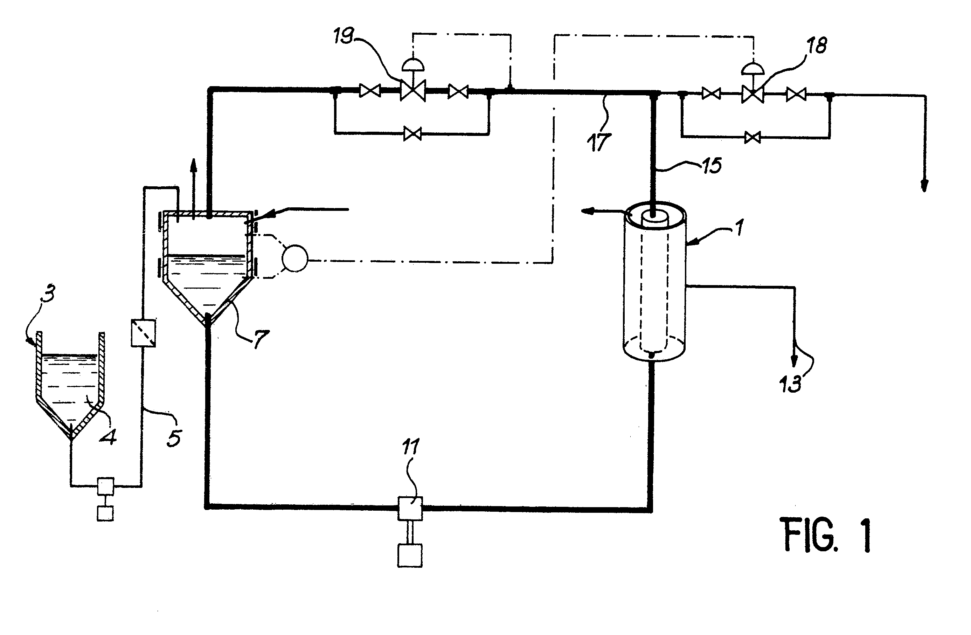

On a représenté schématiquement sur la figure 1 une forme de mise en oeuvre du procédé selon l'invention. Le module d'ultrafiltration 1 comporte plusieurs barrières minérales d'ultrafiltration, mais dans un but de simplification, une seule barrière a été représentée. Chaque barrière est formée d'un support cylindrique en céramique d'un diamètre intérieur de 15 mm et d'une longueur de 800 mm revêtu intérieurement d'une couche d'ultrafiltration à base d'oxydes métalliques. Le sens normal du flux d'ultrafiltrat est donc de l'intérieur vers l'extérieur de la barrière. La surface active de chaque barrière est de 360 cm$^2$.

L'installation comporte un bac de charge 3 à l'intérieur duquel est introduite la charge 4 d'hydrocarbure à traiter. Le bac de charge 3 est relié par une canalisation 5 à un bac tampon 7. A partir du bac tampon 7, la charge d'ultrafiltrat est introduite sous pression au moyen d'une pompe à engrenage 11 à l'intérieur du module 1 d'ultrafiltration. La charge 4 circule à l'intérieur du module 1. Une partie de cette charge s'écoule à travers les pores des barrières d'ultrafiltration: c'est l'ultrafiltrat. Il est recueilli en 13. L'autre partie sort en 15 du module d'ultrafiltraton 1 pour être recyclée au moyen d'une canalisation 17 vers le bac tampon 7.

Les barrières d'ultrafiltration sont caractérisées par leur rayon de perméamétrie. Ces barrières sont disponibles dans le commerce pour des rayons de perméamétrie de 100, 150 et $200 \cdot 10^{-10}$ m.

Des impuretés sont présentes, soit en suspension, soit en solution dans la charge 4 d'hydrocarbure. Ces impuretés peuvent être constituées par exemple par des boues, des particules charbonneuses, des produits d'oxydation de l'huile ou de l'essence, des particules métalliques, des additifs dans un état plus ou moins dégradé. Au cours de l'ultrafiltration, ces impuretés sont retenues en majorité par les barrières d'ultrafiltration. Par conséquent, leur concentration augmente. Le circuit comporte une vanne 18 de soutirage du concentrat qui permet la régulation du niveau dans le bac tampon 7.

Le circuit comporte en outre une vanne 19 pour la régulation de pression.

L'ensemble du circuit est calorifugé et tracé électriquement. Il comporte en outre des appareils de mesure du débit et de la pression.

Le procédé de traitement par ultrafiltration d'une charge d'hydrocarbure selon l'invention trouve une application à la régénération d'une huile usée. La charge 4 d'hydrocarbure est alors constituée par l'huile usée elle-même. Les différentes impuretés présentes dans cette huile usée retenues par les barrières d'ultrafiltration. L'ultrafiltrat recueilli en 13 est constitué par une huile débarrassée de ses impuretés et dont les caractéristiques sont par conséquent voisines de celles d'une huile de base.

Selon l'invention, on améliore la qualité de la séparation en faisant subir aux huiles usées un traitement thermique, qui consiste en un chauffage préalable de l'huile à une température comprise entre 200 et 350° C.

Afin de prévenir le colmatage progressif des barrières, on peut appliquer périodiquement une contrepression d'ultrafiltrat sur leur face externe, et on abaisse la pression sur la face interne, ce qui provoque une inversion du sens d'ultrafiltration. La pression appliquée sur la face externe peut être comprise entre 1 et 30 bars relatifs. Cette opération, de courte durée effectuée à intervalles de temps fixés, est faite sans interrompre la circulation de la charge d'hydrocarbure à l'intérieur des barrières et sans modifier la température.

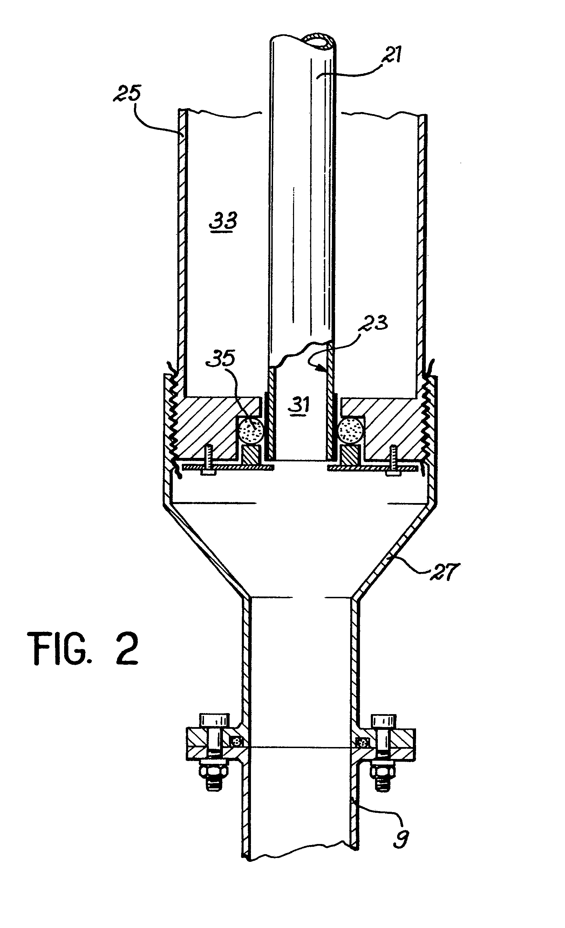

On a représenté sur la figure 2 une vue schématique d'une barrière d'ultrafiltration utilisée pour la régénération d'une huile usée. Cette barrière se présente sous la forme d'un tube 21 de 80 cm de longueur, de 1,5 cm de diamètre intérieur, de 1,9 cm de diamètre extérieur. L'épaisseur du tube 21 est réalisée pour l'essentiel par un matériau support dont le rayon des pores est de l'ordre de 1 µ. Le tube 21 est revêtu intérieurement d'une couche sensible 23 dont les pores sont calibrés en fonction des éléments à séparer. Le module d'ultrafiltration comprend 7 barrières placées dans un tube 25 de 7,5 cm de diamètre.

Un cône de raccordement 27 relie le tube 25 à la tuyauterie 9. L'huile usée pénètre dans le module d'ultrafiltration par la tuyauterie 9, puis circule à l'intérieur de la chambre à haute pression 31. Elle s'écoule ensuite au travers de la barrière 21 vers la chambre à basse pression 33.

Dans le but de permettre l'étanchéité entre les chambres haute pression 31 et basse pression 33 à l'endroit des supports de barrière, les tubes sont vitrifiés à leur extrémité sur une longueur de deux centimètres. Les chambres haute pression et basse pression sont isolées par des joints 35. Ces joints 35 sont des joints toriques en viton si la température est inférieure à 180° C et des joints plats garphités si la température est supérieure à 180° C.

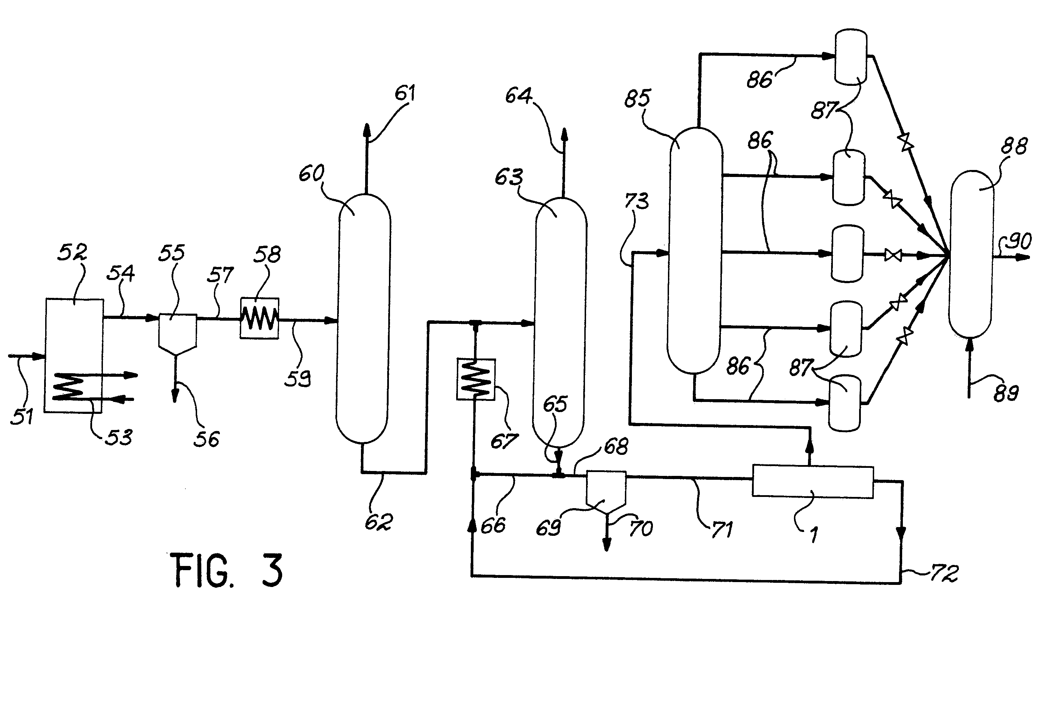

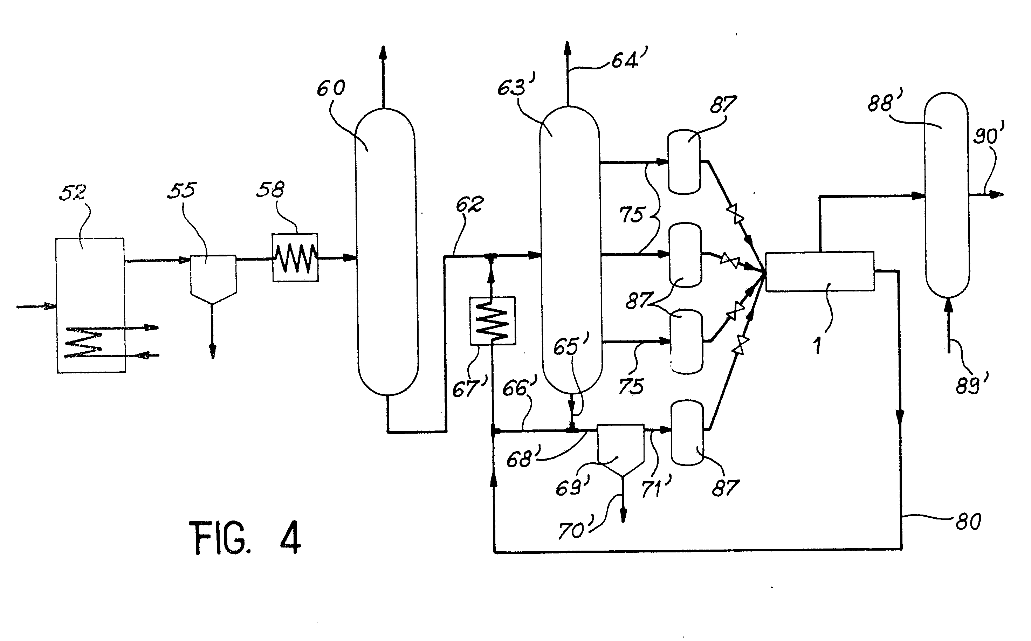

On a représenté sur les figures 3 et 4, des exemples de réalisation du procédé selon l'invention appliqué à la régénération d'une huile usée. La charge d'huile usagée est introduite par la ligne 51 dans une enceinte 52 où, grâce à un serpentin 53, dans lequel circule un fluide caloporteur, l'huile est chauffée avant d'être soumise à une centrifugation dans une centrifugeuse 55, où elle est conduite par la ligne 54, à sa sortie de l'enceinte 52.

La température à laquelle l'huile est chauffée dans l'enceinte 52, et donc celle à laquelle est effectuée la centrifugation, peut être comprise par exemple entre 60 et 95° C et être notamment voisine de 90° C.

La centrifugation permet de séparer la plus grande partie de l'eau et des matières solides contenues dans l'huile, qui sont évacuées par la ligne 56. L'huile sortant de la centrifugeuse par la ligne 57 passe dans un four 58, où elle est chauffée avant d'être soumise à une distillation sous une pression voisine de la pression atmosphérique dans une colonne de distillation 60, dans la partie médiane de laquelle elle est conduite par la ligne 59.

La température à laquelle l'huile est chauffée dans le four 58, et donc celle à laquelle est effectuée la distillation, peut être comprise par exemple entre 150 et 200° C et être notamment voisine de 180° C.

On recueille au sommet de la colonne 60, par la ligne 61, un effluent gazeux constitué par des produits légers, comme l'eau non séparée dans la centrifugeuse 55, l'essence et les solvants chlorés contenus dans l'huile.

L'huile est recueillie au fond de la colonne 60, par la ligne 62. Elle est conduite dans la partie médiane d'une colonne de distillation 63, où la température est voisine de 360° C.

La pression à l'intérieur de la colonne 63 est égale ou voisine de la pression atmosphérique.

On recueille au sommet de la colonne 63, par la ligne 64, une fraction constituée par du gazole.

L'huile est recueillie au fond de la colonne 63, par la ligne 65. Une partie de l'huile recueillie par la ligne 65 est conduite par la ligne 66 dans un four 67 où elle est réchauffée à la température de la distillation, avant d'être mélangée à la charge de la ligne 62 et recyclée à la colonne 63. C'est le four 67 qui permet l'apport de calories à l'intérieur de la colonne 63.

La distillation conduite dans la colonne 63 permet donc de séparer le gazole de l'huile. Mais, en même temps, l'huile subit un choc thermique de fait de la température élevée du four 67. Ce choc thermique a pour effet de casser les molécules d'additifs contenues dans la charge et de permettre la séparation des métaux lourds au cours des traitements ultérieurs de l'huile obtenue dans la ligne 65.

Une seconde partie de l'huile de la ligne 65 est conduite, par la ligne 68, dans une centrifugeuse 69, fonctionnant à une température voisine de 180° C. La centrifugation permet de séparer une boue contenant notamment les métaux lourds et qui est éliminée par la ligne 70.

L'huile sortant de la centrifugeuse par la ligne 71 est régénérée pour être utilisée comme base pour huile lubrifiante.

Dans un procédé classique de régénération d'huiles usées, l'huile sortant de la centrifugeuse par la ligne 71 subit un traitement à l'acide pour floculer les particules de carbone et sulfoner les produits oxydés.

Dans le procédé selon l'invention, le traitement à l'acide est remplacé par une ultrafiltration, ce qui évite l'élimination des boues acides.

Dans l'exemple de réalisation représenté sur la figure 3, l'huile sortant de la centrifugeuse 69 est conduite par la ligne 71 dans une unité d'ultrafiltration 1. Entre la centrifugeuse 69 et l'unité 1, peut être placé un échangeur de chaleur pour refroidir ou réchauffer l'huile à la température à laquelle on désire que l'ultrafiltration soit effectuée. L'huile non filtrée est recyclée dans le four 67 par la ligne 72.

L'ultrafiltrat est ensuite introduit par la ligne 73 dans la partie médiane d'une colonne 85 de distillation sous pression réduite. On peut donc recueillir à des hauteurs différentes de cette colonne par les lignes 86 des fractions d'huile de viscosités différentes, qui sont ensuite soumises à un traitement d'hydrogénation catalytique pour les décolorer. Elles sont introduites dans les bacs tampons 87, puis dans le réacteur d'hydrogénation 88. L'hydrogène est amené par la ligne 89. L'huile régénérée est recueillie en 90.

Dans l'autre forme de réalisation représentée sur la figure 4, la distillation effectuée dans la colonne 63' est effectuée sous pression réduite. On recueille à différentes hauteurs de la colonne par les lignes 64', 65' et 75 différentes fractions qui sont traitées de façon différente. On recueille par la ligne 64', au sommet de la colonne, du gazole. On recueille au fond de la colonne par la ligne 65' de l'huile dont une partie est conduite par la ligne 66' dans le four 67' et recyclée à la colonne 63'.

L'autre partie de l'huile est conduite dans la centrifugeuse 69'.

Les fractions d'huile recueillies par les lignes 75 à différentes hauteurs de la colonne et celle recueillie par la ligne 71' à la sortie de la centrifugeuse 69', sont recueillies dans des bacs tampon 87, puis ultrafiltrées de façon séquentielle dans l'unité 1. L'huile non filtrée est recyclée par la ligne 80 dans le four 67'.

L'ultrafiltrat est hydrogéné dans le réacteur 88' de la même façon que dans le cas de l'exemple de réalisation de la figure 3.

L'invention est illustrée de façon non limitative par les deux exemples qui suivent, et qui concernent des essais effectués dans l'installation représentée sur les figures 1 et 2.

## Exemple 1

Cet exemple concerne un essai d'ultrafiltration d'une charge d'huile usée. Cet essai a été réalisé à une température de 200°C avec un module d'ultrafiltration comprenant 7 barrières revêtues d'une couche sensible constituée d'oxyde mixte d'aluminium et de magnésium mélangé à de la silice, d'un rayon de pores de $200 \cdot 10^{-10}$ m. La pression était de 5 bars relatifs, avec une vitesse linéaire dans les barrières de 3,23 m/s. Dans ces conditions, le débit d'ultrafiltration obtenu a été de 650 l/j/m².

Les caractéristiques de la charge de l'ultrafiltrat et du concentrat sont données dans le tableau I ci-joint.

Cet exemple montre bien l'efficacité du procédé selon l'invention pour la régénération des huiles usées.

## Exemple 2

Cet exemple concerne un essai d'ultrafiltration de résidus de distillation sous vide d'un pétrole brut d'origine irakienne Kirkouk. Cet essai a été effectué à une température de 330°C sur un module d'ultrafiltration comprenant 3 barrières revêtues d'une couche sensible de bioxyde de titane et d'oxyde d'aluminium, d'un rayon de perméamétrie de $100 \cdot 10^{-10}$ m. La pression d'ultrafiltration a été de 5 bars relatifs et la vitesse linéaire de 5,6 m/s. Le débit d'ultrafiltration a été de 667 l/j/m².

Les caractéristiques de la charge de l'ultrafiltrat et du concentrat sont données dans le tableau II ci-joint.

Cet exemple montre que l'on peut diminuer le taux d'asphaltènes d'une charge en contenant en utilisant le procédé selon l'invention.

Tableau 1

| Selon Norme | | | Charge | Ultrafiltrat | Concentrat |
|---|---|---|---|---|---|
| | Viscosité | 40°C | 100,2 | 87,2 | 127,92 |
| NFT 60-100 | · 10⁻⁶ m²/s (cSt) | 100°C | 11,8 | 10,2 | 14,05 |
| | | VI | 107 | 97 | 108 |
| ASTM S 664 | TAN inflexion | mg KOH/g | | 0,1 | |
| | | pH | 0,6 | | 1 |
| ASTM D 664 | TBN inflexion | mg KOH/g | | 0,1 | |
| | | pH | 0,1 | | 0,1 |
| ASTM I 2896 | TBN | mg KOH/g | 2,4 | 0,41 | 5,20 |
| ASTM D 893 | insolubles pentane | % m. | 0,78 | <0,05 | 0,91 |
| | insolubles toluène | % m. | 0,31 | <0,05 | 0,51 |
| NFT 60-116 | Conradson | % m. | 2,1 | 0,47 | 2,9 |
| NFT 60-143 | cendres sulfatées | % m. | 0,35 | <0,005 | 0,68 |
| NFT 60-110 | Indice de saponif. | mg KOH/g | 5,0 | 2,1 | 6,0 |
| | ppm pds | Ba | 85 | <10 | 176 |
| | | Ca | 602 | <10 | 1241 |
| | | Mg | 96 | <10 | 199 |
| | | B | <10 | <10 | <10 |
| | | Zn | 15 | <10 | 31 |
| | | P | 520 | 29 | 1079 |
| | | Fe | 152 | 6 | 315 |
| | | Cr | 3 | <1 | 6 |
| | | Al | 6 | <2 | 13 |
| | | Cu | 2 | <1 | 4 |
| | | Sn | 3 | <2 | 5 |
| | | Pb | 241 | 8 | 502 |
| | | Ag | <1 | <1 | <1 |
| | | Si | 15 | 3 | 31 |
| | | Na | 41 | <5 | 85 |
| | | Mo | <2 | <2 | <2 |
| | % pds | S | 0,97 | 0,92 | 1,01 |
| | | N | ≤0,05 | ≤0,05 | ≤0,05 |

Tableau 2

|  | Ultrafiltrat | Concentrat | Charge |
|---|---|---|---|
| asphaltènes (% pds) | 4,14 | 9,36 | 6,30 |
| Vanadium (ppm pds) | 90 | 195 | 128 |
| densité à 15°C | 0,9831 | 1,0400 | 1,0156 |
| viscosité à 100°C (m²/s) | $188 \cdot 10^{-6}$ | — | $650 \cdot 10^{-6}$ |

## Revendications

1. Procédé de traitement par ultrafiltration d'une charge hydrocarbonée, caractérisé en ce que l'on fait circuler ladite charge (4) à l'intérieur d'au moins un module (1) comprenant au moins une barrière d'ultrafiltration minérale revêtue d'une couche sensible (23) d'au moins un oxyde métallique et en ce que l'on opère à une température supérieure à 100°C ladite barrière étant apte à supporter une contre-pression comprise entre 1 et 30 bars relatifs.

2. Procédé selon la revendication 1, caractérisé en ce que la barrière minérale est une barrière à support céramique.

3. Procédé selon la revendication 1, caractérisé en ce que la barrière minérale est une barrière à support métallique.

4. Procédé selon l'une quelconque des revendications 1 à 3, caractérisé en ce que la couche sensible (23) est constituée d'au moins un oxyde métallique choisi dans le groupe comprenant le bioxyde de titane, l'oxyde de magnésium, l'oxyde d'aluminium, les oxydes mixtes à base d'alumine, la silice.

5. Procédé selon l'une quelconque des revendications 1 à 4, caractérisé en ce que, sans interrompre la circulation de la charge d'hydrocarbure à l'intérieur des barrières, on applique momentanément une contre-pression d'ultrafiltrat sur la face externe des barrières, ce qui provoque l'inversion du sens d'ultrafiltration.

6. Procédé selon l'une quelconque des revendications 1 à 5, caractérisé en ce que la pression d'ultrafiltration est comprise entre 1 et 20 bars relatifs.

7. Procédé selon l'une quelconque des revendications 1 à 6, caractérisé en ce que la vitesse de circulation de l'huile moteur usée a l'interieur de la barrière est comprise entre 1 et 10 m/s.

8. Procédé selon l'une quelconque des revendications 1 à 7, caractérisé en ce que l'on opère à une température comprise entre 100 et 350°C.

9. Procédé selon l'une quelconque des revendications 1 à 8, caractérisé en ce que le rayon de perméamétrie de la barrière utilisée est compris entre 50 et $250 \cdot 10^{-10}$ m.

10. Procédé selon l'une quelconque des revendications 1 à 9 appliqué à la diminution du taux d'asphaltènes dans une charge hydrocarbonée, caractérisé en ce que ladite charge hydrocarbonée contient des asphaltènes, l'ultrafiltrat présentant un taux d'asphaltène réduit par rapport à celui de la charge.

11. Procédé selon l'une quelconque des revendications 1 à 9, appliqué à la régénération d'une huile moteur usée, caractérisé en ce que la charge (4) est constituée par l'huile usée, l'ultrafiltrat obtenu constituant une huile purifiée de ses impuretés.

12. Procédé selon la revendication 11, caractérisé en ce que l'on soumet l'huile usée à un traitement thermique préalablement à son ultrafiltration, à une température comprise entre 200 et 350°C.

13. Procédé selon la revendication 10, caractérisé en ce que les barrières d'ultrafiltration sont revêtues d'une couche sensible de bioxyde de titane et d'oxyde d'aluminium.

14. Procédé selon la revendication 13, caractérisé en ce que le rayon des pores de la barrière est de $100 \cdot 10^{-10}$ m.

15. Procédé selon l'une quelconque des revendications 1 à 9, 11 et 12 appliqué à la régénération d'une huile moteur usée, consistant en ce que:

— on chauffe l'huile moteur usée,
— on la centrifuge afin de séparer l'eau et les matières solides,
— on la chauffe dans un four (58) à une température comprise entre 150 et 200°C,
— on la distille, sous une pression voisine de la pression atmosphérique, dans une colonne (60),
— on recueille l'huile moteur usée au fond de la colonne de distillation (60),
— on l'introduit dans la partie médiane d'une colonne de distillation (63) dans laquelle on la distille sous une pression voisine de la pression atmosphérique, à une température de 360°C,
— on recueille l'huile au fond (65) de la colonne (63),
— on recycle une partie de l'huile recueillie au fond (65) de la colonne (63) dans un four (67) où elle est réchauffée à la température de la distillation, avant d'être mélangée à la charge de la ligne (62) et recyclée dans la colonne (63),
— on centrifuge une seconde partie de l'huile (68) à une température voisine de 180°C, dans une centrifugeuse (69),

caractérisé en ce qu'on filtre l'huile sortant de la centrifugeuse (69) dans un module d'ultrafiltration (1).

16. Procédé selon la revendication 15, caractérisé en ce que l'ultrafiltrat obtenu à la sortie du module (1) est distillé à une pression inférieure à la pression atmosphérique, et en ce que l'on recueille par des lignes (86), situées à des hauteurs différentes sur la colonne de distillation (85), des huiles de viscosités différentes, qui subissent un traitement d'hydrogénation.

17. Procédé selon l'une quelconque des revendications 1 à 9, 11 et 12 appliqué à la régénération d'une huile moteur usée, consistant en ce que:

— on chauffe l'huile usée,
— on la centrifuge afin de séparer l'eau et les matières solides,
— on la chauffe dans un four (58) à une température comprise entre 150 et 200°C,
— on la distille, sous une pression voisine de la pression atmosphérique, dans une colonne (60),
— on recueille l'huile usée au fond de la colonne de distillation (60),
— on l'introduit dans la partie médiane d'une colonne de distillation (63') dans laquelle on la distille sous une pression inférieure à la pression atmosphérique, à une température de 360°C,
— on recueille:

   — d'une part au fond de la colonne (63') une première fraction d'huile,
   — on recycle une partie de l'huile recueillie au fond (65') de la colonne (63') dans un four (67') où elle est réchauffée à la température de la distillation, avant d'être mélangée à la charge de la ligne (62) et recyclée dans la colonne (63'),
   — on centrifuge une seconde partie de l'huile (68') à une température de 180°C, dans une centrifugeuse (69'),
   — d'autre part à différentes hauteurs de la colonne (63') différentes fractions d'huiles (75),

caractérisé en ce que l'huile sortant de la centrifugeuse (69) et les différentes fractions d'huile (75) sont filtrées dans un module d'ultrafiltration (1) puis subissent un traitement d'hydrogénation.

18. Procédé selon l'une quelconque des revendications 15 à 17, caractérisé en ce que les barrières d'ultrafiltration sont revêtues d'une couche sensible d'oxyde mixte de magnésium et d'aluminium mélangé à de la silice.

19. Procédé selon la revendication 18, caractérisé en ce que le rayon des pores de la barrière est de $200 \cdot 10^{-10}$ m.

## Patentansprüche

1. Verfahren zur Ultrafiltrationsbehandlung einer Ladung von Kohlenwasserstoffen, dadurch gekennzeichnet, daß man die Ladung (4) im Inneren von wenigstens einem Modul (1) strömen läßt, welches wenigstens eine mineralische Ultrafiltrationsmembrane umfaßt, die mit einer empfindlichen Schicht (23) von wenigstens einem Metalloxyd überzogen ist, und daß man bei einer Temperatur von mehr als 100°C die Membrane betreibt, die einen Gegendruck zwischen 1 und 30 relativen Bar aushalten kann.

2. Verfahren nach Anspruch 1, dadurch gekennzeichnet, daß die mineralische Membran eine Membrane mit einem keramischen Träger ist.

3. Verfahren nach Anspruch 1, dadurch gekennzeichnet, daß die mineralische Membrane eine Membrane mit einem metallischen Träger ist.

4. Verfahren nach einem der Ansprüche 1 bis 3, dadurch gekennzeichnet, daß die empfindliche Schicht (23) von wenigstens einem Metalloxyd gebildet ist, welches aus der Titandioxyd, Magnesiumoxyd, Aluminiumoxyd, Mischoxyde auf Aluminiumbasis, Siliciumoxyd umfassenden Gruppe ausgewählt ist.

5. Verfahren nach einem der Ansprüche 1 bis 4, dadurch gekennzeichnet, daß man, ohne die Strömung der Ladung von Kohlenwasserstoff im Inneren der Membranen zu unterbrechen, vorübergehend einen Gegendruck des Ultrafiltrats auf die Außenseiten der Membranen anwendet, wodurch eine Umkehr der Richtung der Ultrafiltration hervorgerufen wird.

6. Verfahren nach einem der Ansprüche 1 bis 5, dadurch gekennzeichnet, daß der Ultrafiltrationsdruck zwischen 1 und 20 relativen Bar liegt.

7. Verfahren nach einem der Ansprüche 1 bis 6, dadurch gekennzeichnet, daß die Strömungsgeschwindigkeit von gebrauchtem Motoröl im Inneren der Membran zwischen 1 und 10 m/s liegt.

8. Verfahren nach einem der Ansprüche 1 bis 7, dadurch gekennzeichnet, daß dieses bei einer

**0 041 013**

Temperatur zwischen 100 und 350° C durchgeführt wird.

9. Verfahren nach einem der Ansprüche 1 bis 8, dadurch gekennzeichnet, daß der Permeametrieradius der verwendeten Membrane zwischen 50 und 250 · 10⁻¹⁰ m liegt.

10. Verfahren nach einem der Ansprüche 1 bis 9, welches zur Verringerung des Anteils von Asphaltenen einer Ladung von Kohlenwasserstoffen eingesetzt wird, dadurch gekennzeichnet, daß die Ladung von Kohlenwasserstoffen Asphaltene enthält und daß das Ultrafiltrat einen gegenüber dem der Ladung verringerten Anteil von Asphaltenen enthält.

11. Verfahren nach einem der Ansprüche 1 bis 9, welches zur Regeneration von gebrauchtem Motoröl angewendet wird, dadurch gekennzeichnet, daß die Ladung (4) von gebrauchtem Öl gebildet ist und daß das erhaltene Ultrafiltrat ein von seinen Verunreinigungen gereinigtes Öl bildet.

12. Verfahren nach Anspruch 11, dadurch gekennzeichnet, daß das gebrauchte Öl einer Wärmebehandlung vor seiner Ultrafiltration bei einer Temperatur zwischen 200 und 350° C unterzogen wird.

13. Verfahren nach Anspruch 10, dadurch gekennzeichnet, daß die Ultrafiltrationsmembranen mit einer empfindlichen Schicht aus Titandioxyd und Aluminiumoxyd überzogen sind.

14. Verfahren nach Anspruch 13, dadurch gekennzeichnet, daß der Porenradius der Membrane etwa $100 · 10^{-10}$ m beträgt.

15. Verfahren nach einem der Ansprüche 1 bis 9, 11 oder 12, welches zur Regeneration von gebrauchtem Motoröl angewendet wird und darin besteht, daß:

— das gebrauchte Motoröl erwärmt wird,
— dieses zentrifugiert wird, um Wasser und Feststoffe abzutrennen,
— dieses in einem Ofen (58) auf eine Temperatur zwischen 150 und 200° C erwärmt wird,
— dieses in einer Säule (60) bei einem Druck nahe dem Atmosphärendruck destilliert wird,
— das gebrauchte Motoröl am Boden der Destillationssäule (60) gesammelt wird,
— dieses in den mittleren Abschnitt einer Destillationssäule (63) eingebracht wird, in der es bei einer Temperatur von 360° C und einem Druck nahe dem Atmosphärendruck destilliert wird,
— das Öl am Boden (65) der Säule (63) gesammelt wird,
— ein Teil des am Boden (65) der Säule (63) gesammelten Öls in einen Ofen (67) zurückgeführt wird, wo es auf die Destillationstemperatur erwärmt wird, bevor es mit der Ladung der Leitung (62) vermischt und in die Säule (63) zurückgeführt wird,
— ein zweiter Teil des Öls (68) bei einer Temperatur von etwa 180° C in einer Zentrifuge (69) zentrifugiert, dadurch gekennzeichnet,

daß das die Zentrifuge (69) verlassende Öl in einem Ultrafiltrationsmodul (1) gefiltert wird.

16. Verfahren nach Anspruch 15, dadurch gekennzeichnet, daß das an der Austrittsöffnung des Moduls (1) erhaltene Ultrafiltrat bei einem Druck unterhalb des Atmosphärendruckes destilliert wird, und daß über die Leitungen (86) die auf unterschiedlichen Höhen an der Destillationssäule (85) angeordnet sind, Öle unterschiedlicher Viskositäten abgenommen werden, die einer Hydrierungsbehandlung ausgesetzt werden.

17. Verfahren nach einem der Ansprüche 1 bis 9, 11 oder 12, welches zur Regeneration von gebrauchtem Motoröl angewendet wird und darin besteht, daß:

— das gebrauchte Motoröl erwärmt wird,
— dieses zentrifugiert wird, um Wasser und Feststoffe abzutrennen,
— dieses in einem Ofen (58) auf eine Temperatur zwischen 150 und 200° C erwärmt wird,
— dieses in einer Säule (60) bei einem Druck nahe dem Atmosphärendruck destilliert wird,
— das gebrauchte Motoröl am Boden der Destillationssäule gesammelt wird,
— dieses in den mittleren Abschnitt einer Destillationssäule (63') eingebracht wird, in der es bei einer Temperatur von 360° C und einem Druck nahe dem Atmosphärendruck destilliert wird,
— es wird gesammelt:

— einerseits am Boden der Säule (63') eine erste Ölfraktion,
— ein Teil des am Boden (65') der Säule (63') gesammelten Öls wird in einen Ofen (67') zurückgeführt, wo es auf die Destillationstemperatur erwärmt wird, bevor es mit der Ladung der Leitung (62) vermischt und in die Säule (63') zurückgeführt wird,
— ein zweiter Teil des Öls (68') wird bei einer Temperatur von 180° C in einer Zentrifuge (69') zentrifugiert,
— andererseits unterschiedliche Ölfraktionen (75) auf unterschiedlichen Höhen der Säule (63'),

dadurch gekennzeichnet, daß das die Zentrifuge (69) verlassende Öl und die verschiedenen Ölfraktionen (75) in einem Ultrafiltrationsmodul (1) gefiltert und anschließend einer Hydrierungsbehandlung ausgesetzt werden.

18. Verfahren nach einem der Ansprüche 15 bis 17, dadurch gekennzeichnet, daß die Ultrafiltrationsmembranen mit einer empfindlichen Schicht aus mit Siliciumoxyd gemischten Mischoxyden von Magnesium und Aluminium überzogen sind.

9

0 041 013

19. Verfahren nach Anspruch 18, dadurch gekennzeichnet, daß der Porenradius der Membranen $200 \cdot 10^{-10}$ m beträgt.

**Claims**

1. Process for an ultrafiltration treatment of a hydrocarbon load, characterised in that the said load (4) is caused to circulate within at least one module (1) comprising at least one mineral ultrafiltration barrier covered with a sensitive coating (23) of at least one metallic oxide and in that the working temperature is in excess of 100°C, the said barrier being capable of withstanding a counter-pressure of between one and 30 bars relative pressure.

2. Process according to Claim 1, characterised in that the mineral barrier is a barrier with a ceramic support.

3. Process according to Claim 1, characterised in that the mineral barrier is a barrier with a metallic support.

4. Process according to any one of Claims 1 to 3, characterised in that the sensitive coating (23) consists of at least one metallic oxide chosen from the group comprising titanium dioxide, magnesium oxide, aluminium oxide, the mixed oxides based on alumina, silica.

5. Process according to any one of Claims 1 to 4, characterised in that without interrupting the circulation of the hydrocarbon load inside the barriers, a counter-pressure of ultrafiltrate is momentarily applied to the external face of the barriers causing reversal of the direction of ultrafiltration.

6. Process according to any one of Claims 1 to 5, characterised in that the ultrafiltration pressure is comprised between 1 and 20 bars relative pressure.

7. Process according to any one of Claims 1 to 6, characterised in that the velocity of engine oil circulation within the barrier is between 1 and 10 m/s.

8. Process according to any one of Claims 1 to 7, characterised in that the working temperature is between 100 and 350°C.

9. Process according to any one of Claims 1 to 8, characterised in that the radius of permeametry of the barrier used is between 50 and $250 \cdot 10^{-10}$ m.

10. Process according to any one of Claims 1 to 9 applied to the diminution of the level of asphaltenes in a hydrocarbon load, characterised in that the said hydrocarbon load contains asphaltenes, the ultrafiltrate having a level of asphaltene which is low in relation to that of the load.

11. Process according to any one of Claims 1 to 9, applied to the regeneration of used engine oil, characterised in that the load (4) is constituted by used oil, the ultrafiltrate obtained constituting an oil which has been purified of its impurities.

12. Process according to Claim 11, characterised in that the used oil is subjected to heat treatment prior to its ultrafiltration, at a temperature between 200 and 350°C.

13. Process according to Claim 10, characterised in that the ultrafiltration barriers are covered with a sensitive coating of titanium dioxide and aluminium oxide.

14. Process according to Claim 13, characterised in that the radius of the pores in the barrier is $100 \cdot 10^{-10}$ m.

15. Process according to any one of Claims 1 to 9, 11 and 12 applied to the regeneration of a used engine oil, consisting in:

— heating the used engine oil,
— subjecting it to centrifugal treatment to separate the water and solids,
— heating it in an oven (58) at a temperature between 150 and 200°C,
— distilling it at a pressure close to atmospheric pressure in a column (60),
— collecting the used engine oil at the bottom of the distillation column (60),
— introducing it into the middle part of a distillation column (63) in which it is distilled at a pressure close to atmospheric pressure, at a temperature of 360°C,
— collecting the oil at the bottom (65) of the column (63),
— recycling a part of the oil collected at the bottom (65) of the column (63) through an oven (67) in which it is reheated to distillation temperature before being blended with the load in the line (62) and recycled in the column (63),
— and centrifuging a second part of the oil (68) at a temperature in the vicinity of 180°C in a centrifuge (69),

characterised in that the oil emerging from the centrifuge (69) is filtered in an ultrafiltration module (1).

16. Process according to Claim 15, characterised in that the ultrafiltrate obtained at the outlet from the module (1) is distilled at a pressure below atmospheric pressure and in that oils of different viscosities are collected via lines (86) situated at different heigths on the distillation column (85), and in that the said oils undergo a hydrogenation treatment.

17. Process according to any one of Claims 1 to 9, 11 and 12, applied to the regeneration of a used engine oil consisting in:

10

— heating the used oil,
— subjecting it to centrifugal treatment to separate the water and solids,
— heating it in an oven (58) at a temperature between 150 and 200° C,
— distilling it at a pressure close to atmospheric pressure, is a column (60),
— collecting the used oil at the bottom of the distillation column (60),
— introducing it into the middle part of a distillation column (63') in which it is distilled at a pressure below atmospheric pressure, at a temperature of 360° C,
— collecting:

   — on the one hand at the bottom of the column (63') a first oil fraction,
   — recycling a part of the oil collected at the bottom (65') of the column (63') in an oven (67') in which it is reheated to distillation temperature before being blended with the load in the line (62) and recycled in the column (63'),
   — subjecting to centrifugal treatment a second part of the oil (68') at a temperature of 180° C in a centrifuge (69'),
   — furthermore at different heights of the column (63') different fractions of oils (75),

characterised in that the oil emerging from the centrifuge (69) and the different oil fractions (75) are filtered in an ultrafiltration model (1) and then undergo a hydrogenation treatment.

18. Process according to any one of Claims 15 to 17, characterised in that the ultrafiltration barriers are covered with a sensitive coating of mixed magnesium and aluminium blended with silica.

19. Process according to Claim 18, characterised in that the radius of the pores in the barrier is $200 \cdot 10^{-10}$ m.

FIG. 1

FIG. 2

FIG. 3

0 041 013

FIG. 4

52  55  58  60  62  67'  66'  68'  69'  70'  71'  87  65'  75  87  87  75  63'  64'  87  88'  90'  89'  1  80

19

0 041 013